# EUROPÄISCHE PATENTANMELDUNG

(11) **EP 3 214 334 A1**
(43) Veröffentlichungstag der Anmeldung: **06.09.2017**
(21) Anmeldenummer: 17160973.8
(22) Anmeldetag: 30.01.2015
(51) Int. Cl.: F16D 13/70

(54) **KUPPLUNGSVORRICHTUNG**

(30) Priorität: 26.02.2014 DE 102014203452
(62) Teilanmeldung aus: 15708433.6
(71) Anmelder: Schaeffler Technologies AG & Co. KG, 91074 Herzogenaurach (DE)
(72) Erfinder: Bulut, Faruk, 77933 Lahr (DE)

(57) **Zusammenfassung**

Die vorliegende Erfindung betrifft eine Kupplungsvorrichtung für einen Antriebsstrang eines Kraftfahrzeugs mit zumindest einer mit einer Abtriebsseite eines Verbrennungsmotors verbindbaren Gegendruckplatte und mit zumindest einer bezüglich der Gegendruckplatte in axialer Richtung der Kupplungsvorrichtung begrenzt verlagerbaren Anpressplatte zur reibschlüssigen Klemmung einer Kupplungsscheibe zwischen der Gegendruckplatte und der Anpressplatte, wobei zumindest eine der beiden Platten zumindest eine ringförmige, umgeformte Blechplatte mit im Wesentlichen L- oder U-förmigem Querschnitt aufweist.

## Beschreibung

Die vorliegende Erfindung betrifft eine Kupplungsvorrichtung, insbesondere eine trockene Kupplungsvorrichtung für einen Antriebsstrang eines Kraftfahrzeugs.

Aus der DE 10 2009 035 225 A1 ist eine Kupplungsvorrichtung für einen Antriebsstrang eines Kraftfahrzeugs mit einer mit einer Abtriebsseite eines Verbrennungsmotors verbindbaren Gegendruckplatte und mit einer bezüglich der Gegendruckplatte in axialer Richtung der Kupplungsvorrichtung begrenzt verlagerbaren Anpressplatte zur reibschlüssigen Klemmung einer Kupplungsscheibe zwischen der Gegendruckplatte und der Anpressplatte bekannt. Die Anpressplatte ist als Gussbauteil ausgebildet.

Es ist Aufgabe der vorliegenden Erfindung, eine Kupplungsvorrichtung anzugeben, die kostengünstig in großen Stückzahlen hergestellt werden kann.

Erfindungsgemäß gelöst wird diese Aufgabe durch eine Kupplungsvorrichtung für einen Antriebsstrang eines Kraftfahrzeugs gemäß Patentanspruch 1 mit zumindest einer mit einer Abtriebsseite eines Verbrennungsmotors verbindbaren Gegendruckplatte und mit zumindest einer bezüglich der Gegendruckplatte in axialer Richtung der Kupplungsvorrichtung begrenzt verlagerbaren Anpressplatte zur reibschlüssigen Klemmung einer Kupplungsscheibe zwischen der Gegendruckplatte und der Anpressplatte. Da zumindest eine der beide Platten, insbesondere die Anpressplatte, zumindest eine ringförmige, umgeformte Blechplatte mit im Wesentlichen L- oder U-förmigen Querschnitt aufweist, kann die gesamte Kupplungsvorrichtung kostengünstig hergestellt werden. Insbesondere ist die Herstellung von Werkstücken aus ausgestanzten und umgeformten Blechbauteilen üblicherweise günstiger als die Herstellung von vergleichbaren Werkstücken aus Metallguss.

Insbesondere handelt es sich bei der Kupplungsvorrichtung um eine trockene Kupplungsvorrichtung für einen Antriebsstrang eines Kraftfahrzeugs.

Bevorzugte Ausführungsbeispiele der vorliegenden Erfindung sind in den abhängigen Ansprüchen dargelegt.

Die Anpressplatte ist drehfest in einem Kupplungsdeckel angeordnet und bezüglich der Gegendruckplatte in axialer Richtung begrenzt verlagerbar, während die Gegendruckplatte fest mit dem Kupplungsdeckel verbunden ist. Wenn die Kupplungsscheibe im eingerückten Zustand der Kupplungsvorrichtung zwischen der Anpressplatte und der Gegendruckplatte verspannt ist, erfolgt eine reibschlüssige Übertragung des Drehmoments von der Eingangsseite der Kupplungsvorrichtung, d.h. von der Abtriebsseite des Verbrennungsmotors bzw. einem zwischengeschalteten Drehschwingungsdämpfer, beispielsweise einem Zweimassenschwungrad, über die Gegendruckplatte und die Anpressplatte auf die Kupplungsscheibe, und von der Kupplungsscheibe auf die Ausgangsseite der Kupplungsvorrichtung, beispielsweise auf die Eingangswelle eines Getriebes.

Die Kupplungsvorrichtung weist ferner zumindest ein Hebelelement auf, auf das eine Aktoreinrichtung wirkt, durch die die Kupplungsvorrichtung eingerückt bzw. ausgerückt werden kann. Bei dem Hebelelement kann es sich um eine Tellerfeder, wie sie üblicherweise bei normal-eingerückten Kupplungsvorrichtungen zum Einsatz kommt, oder um eine Hebelfeder, wie sie üblicherweise bei normal-ausgerückten Kupplungsvorrichtungen zum Einsatz kommt, handeln.

Wenn die Kupplungsvorrichtung als normal-eingerückte Kupplungsvorrichtung ausgebildet ist, überwiegt die Kraft der einrückenden Tellerfeder, die auf die Anpressplatte wirkt, im betätigungsfreien Zustand die Kraft von ausrückenden Blattfedern, die auf die Anpressplatte wirken. Bei der Betätigung wird die Tellerfeder durch die Aktoreinrichtung mit einer Kraft beaufschlagt, durch die die Kupplung ausgerückt wird. Andererseits kann die Kupplungsvorrichtung aber auch als normal-ausgerückte Kupplungsvorrichtung ausgebildet sein, d.h. als Kupplung, bei der die Kraft der ausrückenden Blattfedern, die auf die Anpressplatte wirken, im betätigungsfreien Zustand die Kraft der Hebelfeder, die auf die Anpressplatte wirkt, überwiegt. Bei der Betätigung wird die Hebelfeder durch die Aktoreinrichtung mit einer Kraft beaufschlagt, durch die die Kupplung eingerückt wird.

Die Kupplungsvorrichtung kann gleichermaßen als gedrückte Kupplungsvorrichtung, d.h. als Kupplungsvorrichtung, bei der die Aktoreinrichtung eine drückende Kraft auf die Tellerfeder bzw. die Hebelfeder ausübt oder als gezogene Kupplungsvorrichtung, d.h. als Kupplungsvorrichtung, bei der die Aktoreinrichtung eine ziehende Kraft auf die Tellerfeder bzw. die Hebelfeder ausübt, ausgebildet sein. Ferner kann die Kupplungsvorrichtung einerseits als Trockenkupplung und andererseits als Nasskupplung ausgebildet sein.

Darüber hinaus kann die Kupplungsvorrichtung als Einfachkupplung ausgebildet sein, d.h. eine einzige Drehmomentübertragungseinrichtung mit einer Anpressplatte, einer Gegendruckplatte und einer dazwischen klemmbaren Kupplungsscheibe aufweisen, kann jedoch auch als Mehrfachkupplung, insbesondere als Doppelkupplung, ausgebildet sein. Die Doppelkupplung kann zwei separate Drehmomentübertragungseinrichtungen aufweisen, kann jedoch auch zwei Drehmomentübertragungseinrichtungen aufweisen, die sich eine gemeinsame Gegendruckplatte, die in diesem Zusammenhang auch als Zentralplatte bezeichnet wird, teilen.

Vorzugsweise weist eine Öffnung des L- oder U-förmigen Querschnitts in axialer Richtung von der Kupplungsscheibe weg. Hierdurch ist es möglich, dass die ringförmige, umgeformte Blechplatte zum einen durch die Schenkel des L- oder U-förmigen Querschnitts auf der der Kupplungsscheibe abgewandten Seite der Blechplatte, d.h. auf der Rückseite der Blechplatte, versteift wird, während die Öffnung zum anderen auch für eine gute Abführung der Reibungswärme auf der Rückseite der Blechplatte während des Betriebs der Kupplungsvorrichtung sorgt.

Gemäß einem weiteren bevorzugten Ausführungsbeispiel weist der U-förmige Querschnitt einen ersten Schenkel, der sich in radialer Richtung der Kupplungsvorrichtung von einem Innenrand der Blechplatte ausgehend im Wesentlichen in axialer Richtung erstreckt, einen zweiten Schenkel, der sich in radialer Richtung von einem Außenrand der Blechplatte ausgehend im Wesentlichen in axialer Richtung erstreckt, und eine die beiden Schenkel verbindende Basis auf. Im Falle eines L-förmigen Querschnitts sind lediglich die Basis sowie der Schenkel, der sich in radialer Richtung von einem Außenrand der Blechplatte ausgehend im Wesentlichen in axialer Richtung erstreckt, vorhanden. Der Schenkel des L-förmigen Querschnitts entspricht dabei dem zweiten Schenkel des U-förmigen Querschnitts.

Weiterhin vorzugsweise ist einer der beiden Schenkel, vorzugsweise der erste Schenkel, in axialer Richtung kürzer als der andere der beiden Schenkel ausgebildet. Vorzugsweise liegt bei der als Anpressplatte ausgebildeten Platte ein Hebelelement, vorzugsweise eine Tellerfeder, zum Ein- und/oder Ausrücken verkippbar auf einer freien Kante des anderen der beiden Schenkel an. Im Falle des L-förmigen Querschnitts liegt ein Hebelelement, vorzugsweise eine Tellerfeder, zum Ein- und/oder Ausrücken verkippbar auf einer freien Kante des Schenkels an, der dem zuvor beschriebenen zweiten Schenkel des U-förmigen Querschnitts entspricht.

Weiterhin ist es von Vorteil, wenn einer der beiden Schenkel, vorzugsweise der zweite Schenkel, mit der Basis einen Winkel α kleiner als 90° einschließt, wobei der Winkel α vorzugsweise 60° < α < 90°, insbesondere vorzugsweise 70° < α < 80°, ist. Gleiches gilt für den Schenkel des L-förmigen Querschnitts, der dem zweiten Schenkel des U-förmigen Querschnitts entspricht.

Die Blechplatte ist vorzugsweise als Stahlanpressplatte ausgebildet. Die Blechplatte kann zumindest teilweise oder vollständig gehärtet sein und/oder zumindest teilweise oder vollständig mit einer Oberflächenbeschichtung versehen sein. Als Oberflächenbeschichtungen kommen beispielsweise Titannitrid, Wolframcarbid oder Diamond-Like-Carbon zum Einsatz. Beispielsweise ist es von Vorteil, wenn die Reibfläche der Blechplatte, d.h. die mit der Kupplungsscheibe in Anlage bringbare Oberfläche der Blechplatte, gehärtet ist, während die freie Kante des Schenkels, an dem das Hebelelement zum Ein- und/oder Ausrücken verkippbar anliegt, eine reibungsmindernde Oberflächenbeschichtung, beispielsweise aus Titannitrid, aufweist.

Gemäß einem weiteren bevorzugten Ausführungsbeispiel ist einer der beiden Schenkel, vorzugsweise der erste Schenkel, in Umfangsrichtung der Kupplungsvorrichtung als geschlossener Ring ausgebildet. Alternativ oder zusätzlich weist der andere der beiden Schenkel, vorzugsweise der zweite Schenkel, mehrere in Umfangsrichtung voneinander beabstandete Kreisbogensegmente auf. Im Falle des L-förmigen Querschnitts ist es von Vorteil, wenn der Schenkel, der sich in radialer Richtung vom Außenrand der Blechplatte ausgehend im Wesentlichen in axialer Richtung erstreckt, mehrere in Umfangsrichtung voneinander beabstandete Kreisbogensegmente aufweist.

Vorzugsweise ist zwischen zwei benachbarten Kreisbogensegmenten eine sich in radialer Richtung, vorzugsweise nach außen, erstreckende Lasche, über die die Anpressplatte mittels zumindest einer Blattfeder drehfest und in axialer Richtung begrenzt verlagerbar an einem Kupplungsdeckel oder an der Gegendruckplatte befestigt ist, ausgebildet.

Gemäß einem besonders bevorzugten Ausführungsbeispiel ist in axialer Richtung zwischen der Blechplatte und der Kupplungsscheibe eine Zusatzplatte vorgesehen, die fest mit der Blechplatte verbunden ist, und die eine Reibfläche zur Anlage an der Kupplungsscheibe aufweist. Hierdurch ist es möglich, dass die Kupplungsvorrichtung auch größere Drehmomente übertragen kann bzw. die dabei entstehende Wärme besser zwischenspeichern und abführen kann.

Im Falle des U-förmigen Querschnitts der Blechplatte ist es von Vorteil, wenn Innen- und Außendurchmesser der Zusatzplatte im Wesentlichen dem Innen- und Außendurchmesser der Blechplatte entsprechen. Im Falle des L-förmigen Querschnitts ist es von Vorteil, wenn der Außendurchmesser der Zusatzplatte im Wesentlichen dem Außendurchmesser der Blechplatte entspricht, während der Innendurchmesser der Zusatzplatte vorzugsweise kleiner als der Innendurchmesser der Blechplatte ist.

Gemäß einem weiteren bevorzugten Ausführungsbeispiel ist die Zusatzplatte als, vorzugsweise nicht umgeformte, weitere Blechplatte ausgebildet. Bei der weiteren Blechplatte handelt es sich vorzugsweise um ein Grobblech mit einer Stärke von 5, 6, 7, 8, 9 oder 10 mm. Genau wie die Blechplatte kann auch die Zusatzplatte eine teilweise oder vollständige Härtung und/oder eine teilweise oder vollständige Oberflächenbeschichtung aufweisen.

Vorzugsweise ist die Zusatzplatte mit der Blechplatte kraftschlüssig und/oder formschlüssig verbunden. Vorzugsweise ist die Zusatzplatte mit der Blechplatte vernietet, kann aber beispielsweise auch verschraubt sein.

Die vorliegende Erfindung wird nachfolgend anhand von bevorzugten Ausführungsbeispielen in Verbindung mit den zugehörigen Figuren näher erläutert. In diesen zeigen:
- Figur 1: ein erstes Ausführungsbeispiel einer Kupplungsvorrichtung mit einer Anpress-platte, die eine ringförmige, umgeformte Blechplatte aufweist, in einer Schnittansicht,
- Figur 2: eine Detailansicht der Kupplungsvorrichtung aus Figur 1, und
- Figur 3: ein zweites Ausführungsbeispiel einer Anpressplatte, die eine ringförmige, umgeformte Blechplatte aufweist, in einer perspektivischen Ansicht.

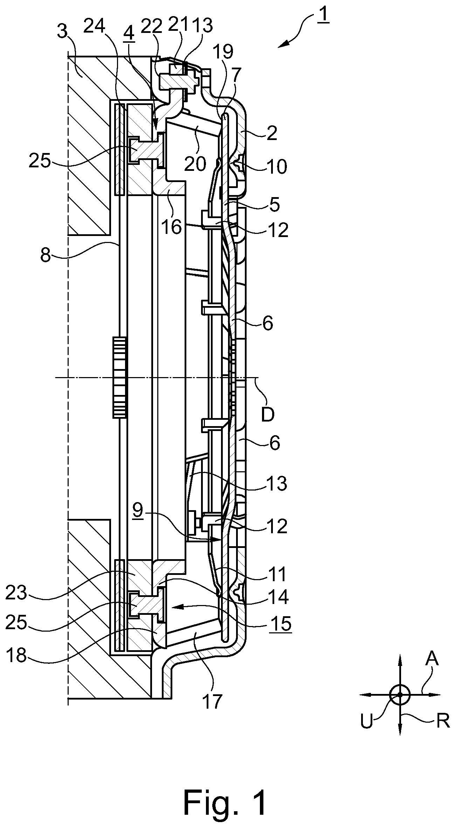

Die Figuren 1 bis 3 betreffen bevorzugte Ausführungsbeispiele einer Kupplungsvorrichtung 1 sowie einer Anpressplatte 4 für eine Kupplungsvorrichtung 1 für ein Kraftfahrzeug. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Kupplungsvorrichtung 1 und der Anpressplatte 4, die Teilkombinationen der im folgenden zu erläuternden Merkmale aufweisen.

Die in Figur 1 dargestellte Kupplungsvorrichtung 1 ist drehbar um eine Drehachse D gelagert und weist zumindest eine Anpressplatte 4, zumindest eine Gegendruckplatte 3 und zumindest eine in axialer Richtung A der Kupplungsvorrichtung 1 zwischen der Anpressplatte 4 und der Gegendruckplatte 3 angeordnete Kupplungsscheibe 8 auf. Die Gegendruckplatte 3 ist mit einem Gehäusebauteil der Kupplungsvorrichtung 1, insbesondere einem Kupplungsdeckel 2, fest verbunden, insbesondere verschraubt. Die Anpressplatte 4 ist im Kupplungsgehäuse, insbesondere innerhalb des Kupplungsdeckels 2, drehfest gelagert und in axialer Richtung A begrenzt verlagerbar. Insbesondere ist die Anpressplatte 4 mittels mehrerer in Umfangsrichtung U der Kupplungsvorrichtung 1 verteilt angeordneter Blattfedern 13 drehfest gelagert und in axialer Richtung A begrenzt verlagerbar. Insbesondere ist die Anpressplatte 4 mittels der Blattfedern 13 drehfest im Kupplungsgehäuse, genauer gesagt am Kupplungsdeckel 2, befestigt und von der Gegendruckplatte 3 weg, d.h. mit Bezug auf Figur 1 nach rechts, vorgespannt.

Darüber hinaus weist die Kupplungsvorrichtung 1 ein Hebelelement auf, das für einen normal-eingerückte Kupplungsvorrichtung 1, die in Figur 1 dargestellt ist, als Tellerfeder 5 und für eine normal-ausgerückte Kupplungsvorrichtung 1 als Hebelfeder ausgebildet sein kann. Die Tellerfeder 5 ist gehäuseseitig abgestützt und durch eine nicht dargestellte Aktoreinrichtung betätigbar. Die gehäuseseitige Abstützung kann beispielsweise durch eine am Kupplungsdeckel 2 vorgesehene Schwenklagerung 9, durch die die Tellerfeder 5 verkippbar aufgehängt ist, erfolgen. Im dargestellten Ausführungsbeispiel weist die Schwenklagerung 9 hierzu eine deckelseitige, umlaufende Sicke 10 oder mehrere deckelseitige, kreisbogensegmentförmig ausgebildete Sicken 10 auf. Ferner weist die Schwenklagerung mehrere in Umfangsrichtung U verteilt angeordnete Haken 12 auf, die sich ins Innere der Kupplungsvorrichtung 1 erstrecken und an denen eine Stützfeder 11 gelagert ist. Zwischen den deckelseitigen Sicken 10 und der Stützfeder 11 ist die Tellerfeder 5 in axialer Richtung A gelagert und erstreckt sich in radialer Richtung R der Kupplungsvorrichtung 1 nach außen.

Über Tellerfederzungen 6, die in radialer Richtung R auf der Innenseite der vorzugsweise im Wesentlichen ringförmig ausgebildeten Tellerfeder 5 angeordnet sind, ist die Tellerfeder 5 durch die Aktoreinrichtung betätigbar. In ihrem radialen Außenbereich weist die Tellerfeder 5 einen Kraftrand 7 auf. Über ihren Kraftrand 7 wirkt die Tellerfeder 5 auf die Anpressplatte 4, indem der Kraftrand 7 der Tellerfeder 5 an freien Kanten 19 einer Blechplatte 14 der Anpressplatte 4 verkippbar anliegt und im eingerückten Zustand der Kupplungsvorrichtung 1 Druck auf die Anpressplatte 4 ausübt.

Bei der normal eingerückten, in Figur 1 dargestellten Kupplungsvorrichtung 1 überwiegt die wirksame Kraft des als Tellerfeder 5 ausgebildeten Hebelelements die Gegenkraft der Blattfedern 13, während bei einer normal-ausgerückten Kupplungsvorrichtung 1 die Gegenkraft der Blattfedern 13 die wirksame Kraft des als Hebelfeder ausgebildeten Hebelelements überwiegt. Dementsprechend führt eine Betätigung der Tellerfeder 5 der normal-eingerückten, in Figur 1 dargestellten Kupplungsvorrichtung 1 zum Ausrücken der Kupplungsvorrichtung 1 durch Verkippen bzw. Umschnappen der Tellerfeder, d.h. zum Abhub der Anpressplatte 4 und zur Entfernung der Anpressplatte 4 von der Gegendruckplatte 3, während eine Betätigung der Hebelfeder bei einer normal-ausgerückten Kupplungsvorrichtung 1 zum Einrücken der Kupplungsvorrichtung 1 durch Verkippen der Hebelfeder führt.

Bei eingerückter Kupplungsvorrichtung 1 wird ein Drehmoment von der Eingangsseite der Kupplungsvorrichtung 1, beispielsweise von einem Zweimassenschwungrad, über das Kupplungsgehäuse und sowohl die Gegendruckplatte 3 als auch die Anpressplatte 4, die beide mit dem Kupplungsgehäuse, insbesondere mit dem Kupplungsdeckel 2, drehfest verbunden sind, reibschlüssig auf die Kupplungsscheibe 8 übertragen. Von der Kupplungsscheibe 8, die reibschlüssig zwischen der Gegendruckplatte 3 und der Anpressplatte 4 geklemmt ist, wird das Drehmoment zur Ausgangsseite der Kupplungsvorrichtung 1 übertragen, beispielsweise zu einer Eingangswelle eines Getriebes.

Da aufgrund des Reibschlusses sowohl die Reibbeläge der Kupplungsscheibe 8 als auch in geringerem Maße die Reibflächen der Gegendruckplatte 3 und der Anpressplatte 4 einem Verschleiß unterworfen sind, muss über die Lebensdauer der Kupplungsvorrichtung 1 die Anpressplatte 4 immer näher an die Gegendruckplatte 3 heranbewegt werden, um die Abnahme der Dicke der Reibbeläge und der Stärke der Reibflächen in axialer Richtung A zu kompensieren und den Reibschluss herstellen bzw. die Kupplungsvorrichtung 1 einrücken zu können. Hierzu kann in der Kupplungsvorrichtung 1 eine nicht dargestellte Verschleißnachstelleinrichtung ausgebildet sein.

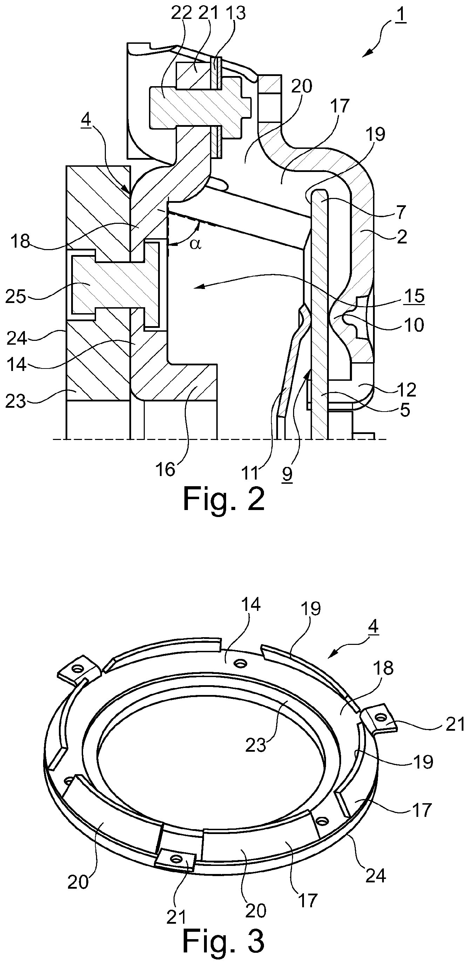

Die in Figur 1 dargestellten Ausführungsbeispiele der Kupplungsvorrichtung 1, deren Details in Figur 2 dargestellt sind, weist die Anpressplatte 4 eine ringförmige, umgeformte Blechplatte 14 mit im Wesentlichen U-förmigen Querschnitt auf. Eine Öffnung 15 des U-förmigen Querschnitts weist in axialer Richtung A von der Kupplungsscheibe 8 weg. Somit ist die Blechplatte 14 ins Innere des Kupplungsdeckels 2 geöffnet.

Der U-förmige Querschnitt weist einen ersten Schenkel 16, der sich in radialer Richtung R von einem Innenrand der Blechplatte 14 ausgehend im Wesentlichen in axialer Richtung A erstreckt, auf. Ferner weist der U-förmige Querschnitt eines zweiten Schenkels 17, der sich in radialer Richtung R von einem Außenrand der Blechplatte 14 ausgehend im Wesentlichen in axialer Richtung A erstreckt, auf. Darüber hinaus weist der U-förmige Querschnitt eine die beiden Schenkel 16, 17 verbindende Basis 18 auf.

Im dargestellten Ausführungsbeispiel ist in axialer Richtung A zwischen der Blechplatte 14 und der Kupplungsscheibe 8 eine Zusatzplatte 23 vorgesehen, die fest mit der Blechplatte 14 verbunden ist, und die eine Reibfläche 24 zur Anlage an der Kupplungsscheibe 8 aufweist. Die Zusatzplatte 23 ist im dargestellten Ausführungsbeispiel als nicht umgeformte, weitere Blechplatte ausgebildet. Innen- und Außendurchmesser der Zusatzplatte 23 entsprechen im dargestellten Ausführungsbeispiel im Wesentlichen dem Innen- und Außendurchmesser der Blechplatte 14. Vorzugsweise handelt es sich bei der Zusatzplatte um ein 5, 6, 7, 8, 9 oder 10 mm starkes Grobblech. Ferner ist die Zusatzplatte 23 mit der Blechplatte 14 kraftschlüssig und/oder formschlüssig verbunden.

Im dargestellten Ausführungsbeispiel ist die Zusatzplatte 23 mit der Blechplatte 14 mittels mehrerer in Umfangsrichtung U verteilt angeordneter Verbindungsniete 25 verbunden. Hierzu sind im dargestellten Ausführungsbeispiel Setzköpfe der Verbindungsniete 25 auf Seiten der Blechplatte 14 und Schließköpfe der Verbindungsniete 25 auf Seiten der Zusatzplatte 23 ausgebildet. Setzköpfe und Schließköpfe sind dabei in die jeweiligen Platten 14, 23 versenkt. Anstelle der Vernietung ist es auch möglich, die Zusatzplatte 23 mit der Blechplatte 14 zu verschrauben. Auch andere Verbindungsarten, beispielsweise auch stoffschlüssige Verbindungsarten, sind möglich.

Obwohl dies nicht dargestellt ist, ist es auch möglich, dass die Anpressplatte 4 lediglich eine Blechplatte 14 und keine Zusatzplatte 23 aufweist, so dass die der Kupplungsscheibe 8 zugewandte Oberfläche der Blechplatte 14 die Reibfläche bildet, mit der sich die Kupplungsscheibe 8 im eingerückten Zustand der Kupplungsvorrichtung 1 in reibschlüssiger Anlage befindet.

Einer der beiden Schenkel 16, 17 der Blechplatte 14, vorzugsweise der erste, d.h. der in radialer Richtung R innen ausgebildete Schenkel 16, ist in axialer Richtung A kürzer als der andere der beiden Schenkel 16, 17 ausgebildet. Die Tellerfeder 5 liegt zum Ein- und/oder Ausrücken der Kupplungsvorrichtung 1 verkippbar auf der freien Kante 19 des anderen der beiden Schenkel 16, 17, d.h. des längeren der beiden Schenkel 16, 17, an. Im dargestellten Ausführungsbeispiel handelt es sich bei dem längeren der beiden Schenkel 16, 17 um den sich vom Außenrand der Blechplatte 14 ausgehend im Wesentlichen in axialer Richtung A erstreckenden Schenkel 17.

Einer der beiden Schenkel 16, 17, vorzugsweise der zweite, d.h. der in radialer Richtung R außen ausgebildete Schenkel 17, schließt mit der Basis 18 einen Winkel α kleiner als 90° ein. Vorzugsweise gilt für den Winkel α 60° < α < 90°, insbesondere vorzugsweise 70° < α < 80°.

Einer der beiden Schenkel 16, 17, vorzugsweise der erste, d.h. der in radialer Richtung R innen ausgebildete Schenkel 16, ist in Umfangsrichtung U als geschlossener Ring ausgebildet.

Alternativ oder zusätzlich weist der andere der beiden Schenkel 16, 17, vorzugsweise der zweite, d.h. der in radialer Richtung R außen ausgebildete Schenkel 17, mehrere in Umfangsrichtung U voneinander beabstandete Kreisbogensegmente 20 auf. Auf diesen Kreisbogensegmenten 20, genauer gesagt auf den freien Kanten 19 der Kreisbogensegmente 20, liegt im dargestellten Ausführungsbeispiel der Kraftrand 7 der Tellerfeder 5 verkippbar auf. Vorzugsweise sind daher die Kreisbogensegmente 20, genauer gesagt die freien Enden 19 der Kreisbogensegmente 20 gehärtet und/oder mit einer reibungsmindernden Oberflächenbeschichtung ausgestattet.

Zwischen zwei benachbarten Kreisbogensegmenten 20 ist eine sich in radialer Richtung R, vorzugsweise nach außen, erstreckende Lasche 21 ausgebildet, über die die Anpressplatte 4 mittels zumindest einer Blattfeder 13 drehfest und in axialer Richtung A begrenzt verlagerbar am Kupplungsdeckel 2 oder an der Gegendruckplatte 3 befestigt ist. Im dargestellten Ausführungsbeispiel weist die Anpressplatte 4 sechs voneinander beabstandete Kreisbogensegmente 20 auf, wobei zwischen Paaren von Kreisbogensegmenten 20 eine von insgesamt drei Laschen 21 vorgesehen ist. Mittels Blattfederniete 22 sind die Blattfedern 13 an den Laschen 21 in Umfangsrichtung U bzw. in tangentialer Richtung befestigt. Ferner sind im dargestellten Ausführungsbeispiel zwischen den Lücken der Kreisbogensegmente 20 die Löcher für die Verbindungsniete 25 zur Befestigung der Zusatzplatte 23 vorgesehen, um eine automatische und kollisionsfreie Vernietung der Zusatzplatte zu ermöglichen.

Obwohl dies in den dargestellten Ausführungsbeispielen nicht gezeigt ist, kann alternativ oder zusätzlich auch die Gegendruckplatte 3 der Kupplungsvorrichtung 1 mit einer zuvor beschriebenen ringförmigen, umgeformten Blechplatte 14 sowie gegebenenfalls einer Zusatzplatte 23, die die zuvor erläuterten Merkmale aufweist / aufweisen, ausgestattet sein.

Die in Figur 3 dargestellte Anpressplatte 4 kann gleichermaßen in der in Figur 1 dargestellten Kupplungsvorrichtung 1 vorgesehen sein. Im Unterschied zur zuvor erläuterten Anpressplatte 4 weist die Blechplatte 14 der in Figur 3 dargestellten Anpressplatte 4 einen im Wesentlichen L-förmigen Querschnitt auf. Eine Öffnung 15 des L-förmigen Querschnitts weist in axialer Richtung A von der Kupplungsscheibe 8 weg. Der L-förmige Querschnitt weist eine Basis 18, mit der die Zusatzplatte 23 vorzugsweise vernietet ist, sowie einen Schenkel, der sich in radialer Richtung R vom Außenrand der Blechplatte 14 ausgehend im Wesentlichen in axialer Richtung A erstreckt, auf.

Für diesen Schenkel gelten die gleichen bevorzugten Weiterbildungen, die bei der Beschreibung des ersten, in Figur 1 dargestellten Ausführungsbeispiels bezüglich des zweiten Schenkels 17 erläutert worden sind.

Darüber hinaus unterscheidet sich die Anpressplatte 4, die in Figur 3 dargestellt ist, von der Anpressplatte 4 der Kupplungsvorrichtung 1 aus Figur 1 dadurch, dass der Außendurchmesser der Zusatzplatte 23 im Wesentlichen dem Außendurchmesser der Blechplatte 14 entspricht, während der Innendurchmesser der Zusatzplatte 23 kleiner als der Innendurchmesser der Blechplatte 14 ist.

Die vorangegangenen Ausführungsbeispiele betreffen eine Kupplungsvorrichtung 1, insbesondere eine trockene Kupplungsvorrichtung 1, für einen Antriebsstrang eines Kraftfahrzeugs mit zumindest einer mit einer Abtriebsseite eines Verbrennungsmotors verbindbaren Gegendruckplatte 3 und mit zumindest einer bezüglich der Gegendruckplatte 3 in axialer Richtung A der Kupplungsvorrichtung 1 begrenzt verlagerbaren Anpressplatte 4 zur reibschlüssigen Klemmung einer Kupplungsscheibe 8 zwischen der Gegendruckplatte 3 und der Anpressplatte 4, wobei zumindest eine der beiden Platten 3, 4, insbesondere die Anpressplatte 4, zumindest eine ringförmige, umgeformte Blechplatte 14 mit im Wesentlichen L- oder U-förmigen Querschnitt aufweist.

### Bezugszeichenliste

- 1: Kupplungsvorrichtung
- 2: Kupplungsdeckel
- 3: Gegendruckplatte
- 4: Anpressplatte
- 5: Tellerfeder
- 6: Tellerfederzunge
- 7: Kraftrand
- 8: Kupplungsscheibe
- 9: Schwenklagerung
- 10: Sicke
- 11: Stützfeder
- 12: Haken
- 13: Blattfeder
- 14: Blechplatte
- 15: Öffnung
- 16: erster Schenkel
- 17: zweiter Schenkel
- 18: Basis
- 19: freie Kante
- 20: Kreisbogensegment
- 21: Lasche
- 22: Blattfederniet
- 23: Zusatzplatte
- 24: Reibfläche
- 25: Verbindungsniet
- α: Winkel
- A: axiale Richtung
- D: Drehachse
- R: radiale Richtung
- U: Umfangsrichtung

## Patentansprüche

1. Kupplungsvorrichtung (1), insbesondere trockene Kupplungsvorrichtung (1), für einen Antriebsstrang eines Kraftfahrzeugs mit zumindest einer mit einer Abtriebsseite eines Verbrennungsmotors verbindbaren Gegendruckplatte (3) und mit zumindest einer bezüglich der Gegendruckplatte (3) in axialer Richtung (A) der Kupplungsvorrichtung (1) begrenzt verlagerbaren Anpressplatte (4) zur reibschlüssigen Klemmung einer Kupplungsscheibe (8) zwischen der Gegendruckplatte (3) und der Anpressplatte (4), wobei zumindest eine der beiden Platten (3, 4), insbesondere die Anpressplatte (4), zumindest eine ringförmige, umgeformte Blechplatte (14) mit im Wesentlichen L- oder U-förmigen Querschnitt aufweist.

2. Kupplungsvorrichtung (1) nach Anspruch 1, wobei eine Öffnung (15) des L- oder U-förmigen Querschnitts in axialer Richtung (A) von der Kupplungsscheibe (8) weg weist.

3. Kupplungsvorrichtung (1) nach Anspruch 1 oder 2, wobei der U-förmige Querschnitt einen ersten Schenkel (16), der sich in radialer Richtung (R) der Kupplungsvorrichtung (1) von einem Innenrand der Blechplatte (14) ausgehend im Wesentlichen in axialer Richtung (A) erstreckt, einen zweiten Schenkel (17), der sich in radialer Richtung (R) von einem Außenrand der Blechplatte (14) ausgehend im Wesentlichen in axialer Richtung (A) erstreckt, und eine die beiden Schenkel (16, 17) verbindende Basis (18) aufweist.

4. Kupplungsvorrichtung (1) nach Anspruch 3, wobei einer der beiden Schenkel (16, 17), vorzugsweise der erste Schenkel (16), in axialer Richtung (A) kürzer als der andere der beiden Schenkel (16, 17) ausgebildet ist, und wobei vorzugsweise bei der als Anpressplatte (4) ausgebildeten Platte (3, 4) ein Hebelelement, vorzugsweise eine Tellerfeder (5), zum Ein- und/oder Ausrücken verkippbar auf einer freien Kante (19) des anderen der beiden Schenkel (16, 17) anliegt.

5. Kupplungsvorrichtung (1) nach Anspruch 3 oder 4, wobei einer der beiden Schenkel (16, 17), vorzugsweise der zweite Schenkel (17), mit der Basis (18) einen Winkel (α) kleiner als 90° einschließt, wobei der Winkel (α) vorzugsweise 60° < α < 90°, insbesondere vorzugsweise 70° < α < 80°, ist.

6. Kupplungsvorrichtung (1) nach einem der Ansprüche 3 bis 5, wobei einer der beiden Schenkel (16, 17), vorzugsweise der erste Schenkel (16), in Umfangsrichtung (U) der Kupplungsvorrichtung (1) als geschlossener Ring ausgebildet ist, und/oder wobei der andere der beiden Schenkel (16, 17), vorzugsweise der zweite Schenkel (17), mehrere in Umfangsrichtung (U) voneinander beabstandete Kreisbogensegmente (20) aufweist.

7. Kupplungsvorrichtung (1) nach Anspruch 6, wobei zwischen zwei benachbarten Kreisbogensegmenten (20) eine sich in radialer Richtung (R), vorzugsweise nach außen, erstreckende Lasche (21) ausgebildet ist, über die die Anpressplatte (4) mittels zumindest einer Blattfeder (13) drehfest und in axialer Richtung (A) begrenzt verlagerbar an einem Kupplungsdeckel (2) oder an der Gegendruckplatte (3) befestigt ist.

8. Kupplungsvorrichtung (1) nach einem der Ansprüche 1 bis 7, wobei in axialer Richtung (A) zwischen der Blechplatte (14) und der Kupplungsscheibe (8) eine Zusatzplatte (23) vorgesehen ist, die fest mit der Blechplatte (14) verbunden ist, und die eine Reibfläche (24) zur Anlage an der Kupplungsscheibe (8) aufweist.

9. Kupplungsvorrichtung (1) nach Anspruch 8, wobei die Zusatzplatte (23) als, vorzugsweise nicht umgeformte, weitere Blechplatte ausgebildet ist.

10. Kupplungsvorrichtung (1) nach Anspruch 8 oder 9, wobei die Zusatzplatte (23) mit der Blechplatte (14) kraftschlüssig und/oder formschlüssig verbunden, vorzugsweise vernietet, ist.
